# EUROPEAN PATENT APPLICATION

(11) **EP 4 841 095 A1**
(43) Date of publication of application: **18.11.2026**
(21) Application number: 25176427.0
(22) Date of filing: 14.05.2025
(51) Int. Cl.: F02K 9/40, F02K 9/64, F02K 9/97

(54) **ROCKET ENGINE SECTION, ROCKET ENGINE AND METHOD OF MANUFACTURING THE ROCKET ENGINE SECTION OR THE ROCKET ENGINE**

(71) Applicant: ArianeGroup GmbH, 82024 Taufkirchen (DE)
(72) Inventor: WINTER, Stefan, 85560 Ebersberg (DE); STIELNER, Leonhard, 83629 Weyarn (DE); AICHNER, Thomas, 83607 Holzkirchen (DE)
(74) Representative: Schicker, Silvia

(57) **Abstract**

Rocket engine section (1) extending along a longitudinal axis (3), comprising: a ring-shaped first part (5) with first cooling channels (7), and a ring-shaped second part (15) with second cooling channels (17), wherein the first part (5) and the second part (15) are two distinct parts connected to each other axially along the longitudinal axis (3) such that each cooling channel of the first cooling channels (7) is connected to a different cooling channel of the second cooling channels (17); rocket engine with the rocket engine section (1); and method of manufacturing the rocket engine section (1) or the rocket engine.

## Description

### Technical Field

The invention relates to a rocket engine section, rocket engine, and a method of manufacturing the rocket engine section or the rocket engine.

### Background

US 2022 / 0 195 965 A1 discloses a combustion chamber for use in an engine and a method of manufacturing the combustion chamber.

### Summary

The problem to be solved by the present invention is to provide a rocket engine section, a rocket engine, and a method of manufacturing the rocket engine section or the rocket engine such that even complex structure of the rocket engine section or the rocket engine can be achieved efficiently.

A solution to the problem is provided by the features of any one of the independent claims.

The solution is based on the following items:
[1] Rocket engine section extending along a longitudinal axis, comprising:
   a ring-shaped first part with first cooling channels, and
   a ring-shaped second part with second cooling channels,
   wherein the first part and the second part are two distinct parts connected to each other axially along the longitudinal axis such that each cooling channel of the first cooling channels is connected to a different cooling channel of the second cooling channels.
   The rocket engine section may be concentric to the longitudinal axis. This means that at least one of the parts, or both parts, may be concentric to the longitudinal axis. Here, ring-shaped means a structure that is circumferentially closed around the longitudinal axis. The longitudinal axis may be on the inside of the rocket engine section, the first part and/or the second part. The cooling channels may be in parallel to each other. The two parts being distinct parts means that they are separately manufactured as individual parts. Their manufacturing process may differ from each other. For example, one or both parts may be made by 3D-printing, laser beam melting or laser metal depositing.
[2] Rocket engine section according to item [1],
   wherein the connected first cooling channels and second cooling channels align.
   The alignment may be such that each pair of first and second cooling channels shares the same longitudinal symmetry-plane, in which the longitudinal axis may lie, along the pair's entire longitudinal extension. Alternatively, at least or only the end portions of each pair of first and second cooling channels adjacent to each other may share said longitudinal symmetry-plane.
[3] Rocket engine section according to any one of the preceding items,
   wherein the connection between the first part and the second part is a permanent connection, optionally a welded connection.
   The welded connection may extend circumferentially partially or entirely around the longitudinal axis. Both parts may comprise a full penetration weld lacking a weld seam on the inside, i.e. on their side facing the longitudinal axis, the opposite side facing away from the longitudinal axis being the outside.
[4] Rocket engine section according to any one of the preceding items,
   wherein the connection between each cooling channel of the first cooling channels to a different cooling channel of the second cooling channels is created by a material removal procedure, optionally by milling.
[5] Rocket engine section according to any one of the preceding items,
   wherein a cooling channel bottom thickness of the first cooling channels and the second cooling channels is largest at their respectively adjacent longitudinal ends.
   So, a cross-sectional area of the rocket engine section in a plane lying orthogonally to the longitudinal axis may be larger at the weld connection of the rocket engine section than at a portion of the cooling channels of at least one of the first and second part.
[6] Rocket engine section according to any one of the preceding items,
   wherein one of the first part and the second part comprises radially open cooling channels that are open in a direction away from the longitudinal axis along the longitudinal axis, while the other of the first part and the second part comprises radially closed cooling channels that are closed in a direction away from the longitudinal axis along the longitudinal axis.
   The terms "open" and "closed" may include entirely "open" or "closed" as well as partially "open" or "closed".
[7] Rocket engine section according to item [6],
   wherein the radially closed cooling channels are closed in a direction away from the longitudinal axis along a portion of the longitudinal axis and open in a direction away from the longitudinal axis at their longitudinal ends adjacent to the radially open cooling channels.
   So, the radially closed cooling channels have a longitudinal portion that is closed and a longitudinal portion that is open. The close portion may have greater longitudinal extension than the open portion.
[8] Rocket engine section according to item [7],
   wherein the radially closed cooling channels are open in a radially stepped down portion of the respective part and axially spaced from a step created by the stepped down portion along the longitudinal axis.

The term "stepped down portion" denotes a recess from the outside towards the inside, i.e. a recess in the outer surface of the respective part. The stepped down portion may be a circumferentially closed recess.

So, the material removal / milling may include two sub-steps for each pair of cooling channels.

First, material removal / milling from one cooling channel to the other may be performed. Thereby, the pair of cooling channels is connected by removing the material between their respective adjacent ends. By removing said material a connecting cooling channel is created. The bottom thickness of the resulting connecting cooling channel, which connects a first cooling channel to a second cooling channel, may be larger than the bottom thickness of the first cooling channel and/or the second cooling channel of the distinct parts. In other words, a cooling channel bottom thickness of the first cooling channels and the second cooling channels is largest at their respectively adjacent longitudinal ends. Thereby, the weld or any other permanent connection connecting both parts has enough material to remain strong.

Second, milling into the outside facing surface of the first part and the stepped down portion is performed. Thereby, longitudinal steps may be created on both sides of the cooling channels of one part, which may extend into a stepped down portion of the other part and end between openings of the cooling channels and a step of said other part in a recess, which may have a flat bottom and/or curved side wall. The flat bottom may be flush with the longitudinal steps.
[9] Rocket engine with a rocket engine section according to any one of the preceding items, wherein the first part and the second part are:
   - both parts of a rocket engine combustion chamber, or
   - both parts of a rocket engine nozzle, or
   - a part of the rocket engine combustion chamber and a part of the rocket engine nozzle connected to each other.
[10] Method of manufacturing a rocket engine section according to any one of items 1 to 8 or a rocket engine according to item 9, comprising:
   connecting the first part and the second part to each other axially along the longitudinal axis such that each cooling channel of the first cooling channels is connected to a different cooling channel of the second cooling channels.

This connecting may include at least one of the following 1^{st} to 4^{th} steps.

In the 1^{st} step, the first part and the second part may be abutted against each other axially along the longitudinal axis. Prior or after that abutment, their cooling channels may be aligned circumferentially, such that they extend along a common direction. Then, the first part and the second part may be permanently connected, for example by being welded together. In particular, both parts may be welded together from the outside, for example by means of a full penetration weld, so that a weld seam on the inside can be avoided.

In the 2^{nd} step, each cooling channel of the first cooling channels may be connected to a different cooling channel of the second cooling channels. Here, this connection may be created by removing the material between the respective first cooling channel and second cooling channel. As a matter of course, this removing of material can be done by milling from one cooling channel to the other cooling channel or vice versa. The bottom thickness of the resulting connecting channel, which connects a first cooling channel to a second cooling channel, may be larger at the abutting ends of both parts than further away from said abutting ends of both parts. In other words, a cooling channel bottom thickness of the first cooling channels and the second cooling channels may be largest at their respectively adjacent longitudinal ends. Thereby, a permanent connection, such as a weld, connecting both parts remains strong. The removing of material may include removing of only material between respective cooling channels as far as necessary for the only purpose of connecting these cooling channels, or may include removing of not only material between respective cooling channels for the purpose of connecting these cooling channels but also removing of material from the outside facing surface of the first part and the stepped down portion. Thereby, longitudinal steps may be created on both sides of the cooling channels, which extend into the stepped down portion and end between the openings of the cooling channels and the step in a recess, which may have a curved wall.

In the 3^{rd} step, flat longitudinal cover elements, such as the ones described in US 2022 / 0 195 965 A1, may be supported by the longitudinal steps and the recess to cover the cooling channels, wherein the cover elements may be flush with the outer surface of the first part and/or the stepped down portion, or are below the outer surface of the first part and/or the stepped down portion.

In the 4^{th} step, a sealing layer may be added on top of the cover elements, for example by 3D-printing, cold gas spraying or laser metal depositing, to seal-off the cooling channels from the outside, such that a cooling fluid inside the cooling channels is prevented from escaping to the outside. The sealing layer may extend to the step and beyond the outer surface of the second part. However, the sealing layer may be flush with the outer surface of the second part, so that a continuous outer surface from the first part to the second part may be created.

The solutions and features described herein may be combined. In particular, any step-like feature may be interpreted as a product-by-process feature for the claimed rocket engine section or rocket engine.

### Brief Description of the Drawings

The foregoing summary, as well as the following detailed description, will be better understood when read in conjunction with the appended drawings. For the purposes of illustrating the present disclosure, preferred embodiments are shown in the drawings. It should be understood, however, that the invention is not limited to the specific embodiments disclosed, and reference is made to the claims for that purpose. The drawings contain the subsequently briefly described figures.
- Fig. 1: is a perspective longitudinal cross-sectional view of a rocket engine section, in a 1^{st} step in a method of manufacturing the rocket engine section.
- Fig. 2: is a perspective longitudinal cross-sectional view of the rocket engine section, in a 2^{nd} step in the method of manufacturing the rocket engine section.
- Fig. 3: is a perspective longitudinal cross-sectional view of the rocket engine section, in a 3^{rd} step in the method of manufacturing the rocket engine section.
- Fig. 4: is a longitudinal cross-sectional view of the rocket engine section, in the 3^{rd} step shown in Fig. 3.
- Fig. 5: is a longitudinal cross-sectional view of the rocket engine section, in a 4^{th} step in the method of manufacturing the rocket engine section.
- Fig. 6: is a perspective view of a rocket engine with a rocket engine combustion chamber and a rocket engine nozzle, and with connected cooling channels.

### Detailed Description

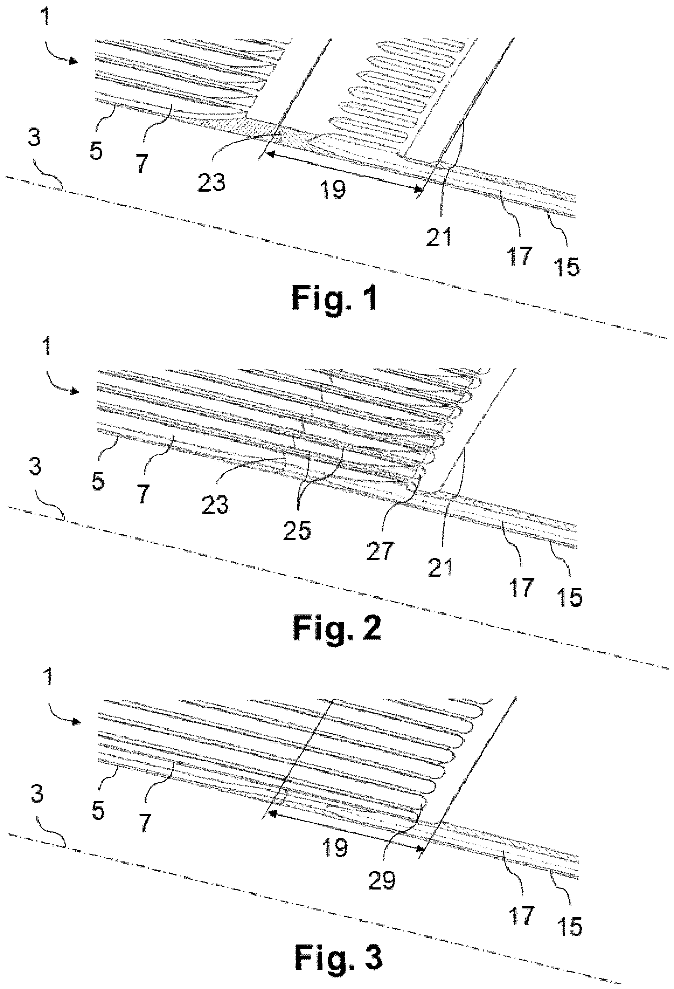

Fig. 1 is a perspective longitudinal cross-sectional view of a rocket engine section 1, in a 1^{st} step in a method of manufacturing the rocket engine section 1.

The shown rocket engine section 1 extends along a longitudinal axis 3. The rocket engine section 1 is formed by a distinct ring-shaped first part 5 with first cooling channels 7, and a distinct ring-shaped second part 15 with second cooling channels 17. Here, ring-shaped means a structure that is circumferentially closed around the longitudinal axis 3. While the longitudinal axis 3 is concentric to both parts 5, 15 and on the inside of both parts 5, 15, the cooling channels 7, 17 are closer to the outside of both parts 5, 15 than to the inside of both parts 5, 15. Here, the respective cooling channels 7, 17 end longitudinally at a distance from the end of the respective part 5, 15 facing the other part 15, 5, and both parts 5, 15 have the same number of cooling channels 7, 17.

Here, the first part 5 comprises radially open cooling channels 7 that are open in a direction away from the longitudinal axis 3 along the longitudinal axis 3, while the second part 15 comprises radially closed cooling channels 17 that are closed in a direction away from the longitudinal axis 3 along the longitudinal axis 3. In particular, the radially closed cooling channels 17 are closed in a direction away from the longitudinal axis 3 along a portion of the longitudinal axis 3 and open in a direction away from the longitudinal axis 3 at their longitudinal ends adjacent, i.e. closest, to the radially open cooling channels 7. As exemplary shown in Fig. 1, the radially closed cooling channels 17 are open in a radially stepped down portion 19 of the respective part 15 and axially spaced from a step 21 created by the stepped down portion 19 along the longitudinal axis 3. The stepped down portion 19 reduces the thickness of the second part 15 to that of the first part 5 in a direction from the outside towards the inside.

In the 1^{st} step, the first part 5 and the second part 15 are abutted against each other axially along the longitudinal axis 3. Prior or after that abutment, their cooling channels 7, 17 can be aligned circumferentially, as shown in Fig. 1, such that they extend along a common direction. Then, the first part 5 and the second part 15 are permanently connected, for example by being welded together. In particular, both parts 5, 15 can be welded together from the outside, for example by means of a full penetration weld 23, so that a weld seam on the inside can be avoided.

Fig. 2 is a perspective longitudinal cross-sectional view of the rocket engine section 1, in a 2^{nd} step in the method of manufacturing the rocket engine section 1.

In the 2^{nd} step, each cooling channel of the first cooling channels 7 is connected to a different cooling channel of the second cooling channels 17. Here, this connection is created by removing the material between the respective first cooling channel 7 and second cooling channel 17. As a matter of course, this removing of material can be done by milling from one cooling channel 7 to the other cooling channel 17 or vice versa. As can be seen in Fig. 2, the bottom thickness of the resulting connecting cooling channel, which connects a first cooling channel 7 to a second cooling channel 17, is larger at the abutting ends of both parts 5, 15 than further away from said abutting ends of both parts 5, 15. In other words, a cooling channel bottom thickness of the first cooling channels and the second cooling channels is largest at their respectively adjacent longitudinal ends. Thereby, the weld 23 connecting both parts 5, 15 remains strong. As can further be seen in Fig. 2, the removing of material may include removing of not only material between respective cooling channels 7, 17 for the purpose of connecting these cooling channels 7, 17 but also removing of material from the outside facing surface of the first part 5 and the stepped down portion 19. Thereby, longitudinal steps 25 are created on both sides of the cooling channels 7, which extend into the stepped down portion 19 and end between the openings of the cooling channels 17 shown in Fig. 1 and the step 21 in a recess 27, which here has a curved wall. Below said recess 27 is the second cooling channel 17.

Fig. 3 is a perspective longitudinal cross-sectional view of the rocket engine section 1, in a 3^{rd} step in the method of manufacturing the rocket engine section 1.

In the 3^{rd} step, flat longitudinal cover elements 29, such as the ones described in US 2022 / 0 195 965 A1, are supported by the longitudinal steps 25 and the recess 27 shown in Fig. 2 to cover the cooling channels 7, 17, wherein the cover elements 29 are flush with the outer surface of the first part 5 and/or the stepped down portion 19, or are below the outer surface of the first part 5 and/or the stepped down portion 19.

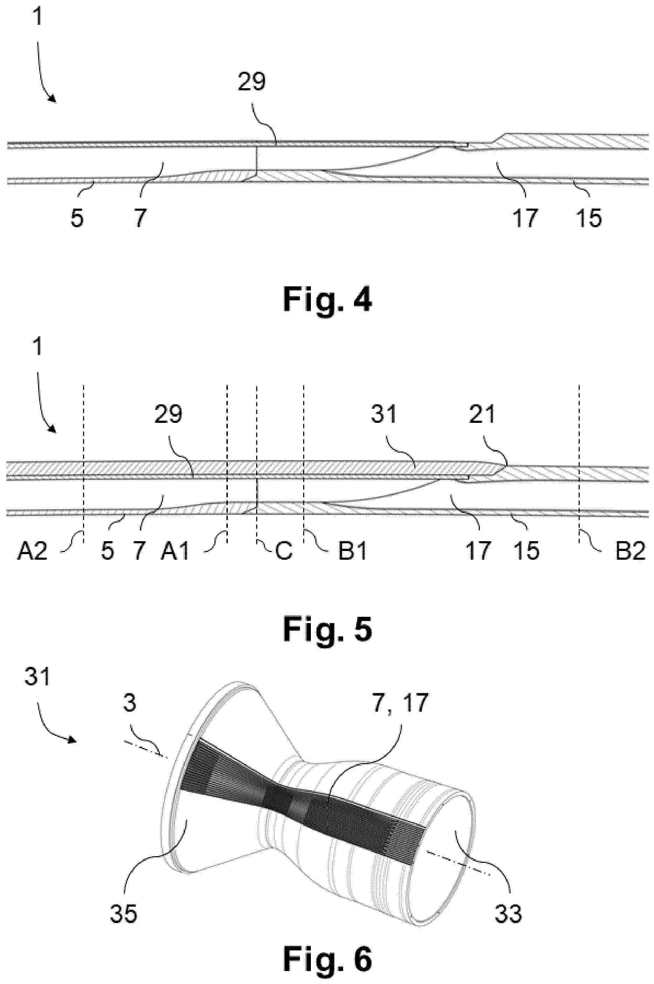

Fig. 4 is a longitudinal cross-sectional view of the rocket engine section 1, in the 3^{rd} step shown in Fig. 3.

Here, the cover elements 29 ensure that the cooling channels 7, 17 are covered towards the outside along their longitudinal extension, for example along their entire longitudinal extension.

In this view of the completed rocket engine section, five cross-sectional planes A1, A2, B1, B2 and C are indicated, which all lie orthogonally to the longitudinal axis 3, which is not shown but located in a distance below the illustrated structure in Fig. 4. A1 and B1 are cross-sectional planes through adjacent longitudinal ends of the first part 5 and the second part 15. C is a cross-sectional plane through the weld connection of the rocket engine section 1. A2 and B2 are cross-sectional planes through the first cooling channels 7 and the second cooling channels 17, wherein A2 and B2 are farther away from each other than A1 and B1. A cross-sectional area of the rocket engine in any or one of these planes specifically, shall refer to the sum of cross-sectional areas containing actual material of the rocket engine section in the respective plane. In other words, voids, such as created by the cooling channels 7, 17 shall not add to said cross-sectional area of the rocket engine in any plane.

Fig. 5 is a longitudinal cross-sectional view of the rocket engine section 1, in a 4^{th} step in the method of manufacturing the rocket engine section 1.

In the 4^{th} step, a sealing layer 31 is added on top of the cover elements 29, for example by 3D-printing, cold gas spraying or laser metal depositing, to seal-off the cooling channels 7, 17 from the outside. As can be seen in Fig. 4, the sealing layer 31 extends to the step 21 and beyond the outer surface of the second part 15. However, the sealing layer 31 may be flush with the outer surface of the second part 15, so that a continuous outer surface from the first part 5 to the second part 15 is created.

Fig. 6 is a perspective view of a rocket engine 31 with a rocket engine combustion chamber 33 and a rocket engine nozzle 35, and with connected cooling channels 7, 17.

The described rocket engine section 1 can be part of the rocket engine 31, wherein the first part 5 and the second part 15 are:
- both parts of a rocket engine combustion chamber 33, or
- both parts of a rocket engine nozzle 35, or
- a part of the rocket engine combustion chamber 33 and a part of the rocket engine nozzle 35 connected to each other. Here, the rocket engine 31 may also serve as a satellite engine. It is to be noted that only some of the connected cooling channels 7, 17 are shown in Fig. 6. In reality, they are distributed, preferably equidistantly, circumferentially around the longitudinal axis 3 on the rocket engine 31, the rocket engine combustion chamber 33 and/or the rocket engine nozzle 35.

A method of manufacturing the rocket engine section 1 or the rocket engine comprises a connecting of the first part 5 and the second part 15 to each other axially along the longitudinal axis 3 such that each cooling channel of the first cooling channels 7 is connected to a different cooling channel of the second cooling channels 17. The connecting of the parts 5, 15 can be done by welding and the connecting of the cooling channels 7, 17 can be done by milling, as described above with reference to Fig. 1 and Fig. 2. As a matter of course, at least one of the above-described steps may be included in the method.

## Claims

1. Rocket engine section (1) extending along a longitudinal axis (3), comprising:
a ring-shaped first part (5) with first cooling channels (7), and
a ring-shaped second part (15) with second cooling channels (17),
wherein the first part (5) and the second part (15) are two distinct parts connected to each other axially along the longitudinal axis (3) such that each cooling channel of the first cooling channels (7) is connected to a different cooling channel of the second cooling channels (17).

2. Rocket engine section (1) according to claim 1,
wherein the connected first cooling channels (7) and second cooling channels (17) align.

3. Rocket engine section (1) according to any one of the preceding claims,
wherein the connection between the first part (5) and the second part (15) is a permanent connection, optionally a welded connection.

4. Rocket engine section (1) according to any one of the preceding claims,
wherein the connection between each cooling channel of the first cooling channels (7) to a different cooling channel of the second cooling channels (17) is created by a material removal procedure, optionally by milling.

5. Rocket engine section (1) according to any one of the preceding claims,
wherein a cooling channel bottom thickness of the first cooling channels (7) and the second cooling channels (17) is largest at their respectively adjacent longitudinal ends.

6. Rocket engine section (1) according to any one of the preceding claims,
wherein one of the first part (5) and the second part (15) comprises radially open cooling channels (7) that are open in a direction away from the longitudinal axis (3) along the longitudinal axis (3), while the other of the first part (5) and the second part (15) comprises radially closed cooling channels (17) that are closed in a direction away from the longitudinal axis (3) along the longitudinal axis (3).

7. Rocket engine section (1) according to claim 6,
wherein the radially closed cooling channels (17) are closed in a direction away from the longitudinal axis (3) along a portion of the longitudinal axis (3) and open in a direction away from the longitudinal axis (3) at their longitudinal ends adjacent to the radially open cooling channels (7).

8. Rocket engine section (1) according to claim 7,
wherein the radially closed cooling channels (17) are open in a radially stepped down portion (19) of the respective part (15) and axially spaced from a step (21) created by the stepped down portion (19) along the longitudinal axis (3).

9. Rocket engine with a rocket engine section (1) according to any one of the preceding claims, wherein the first part (5) and the second part (15) are:
• both parts of a rocket engine combustion chamber, or
• both parts of a rocket engine nozzle, or
• a part of the rocket engine combustion chamber and a part of the rocket engine nozzle connected to each other.

10. Method of manufacturing a rocket engine section (1) according to any one of claims 1 to 8 or a rocket engine according to claim 9, comprising:
connecting the first part (5) and the second part (15) to each other axially along the longitudinal axis (3) such that each cooling channel of the first cooling channels (7) is connected to a different cooling channel of the second cooling channels (17).

## Amended claims

### Amended claims in accordance with Rule 137(2) EPC.

1. Rocket engine section (1) extending along a longitudinal axis (3), comprising:
a ring-shaped first part (5) with first cooling channels (7), and
a ring-shaped second part (15) with second cooling channels (17),
wherein the first part (5) and the second part (15) are two distinct parts permanently connected to each other axially along the longitudinal axis (3) such that each cooling channel of the first cooling channels (7) is connected to a different cooling channel of the second cooling channels (17),
**characterized in that**
the connection between each cooling channel of the first cooling channels (7) to a different cooling channel of the second cooling channels (17) is created by milling from one cooling channel (7, 17) to the other cooling channel (17, 7).

2. Rocket engine section (1) according to claim 1,
wherein the connected first cooling channels (7) and second cooling channels (17) align.

3. Rocket engine section (1) according to any one of the preceding claims,
wherein a cooling channel bottom thickness of the first cooling channels (7) and the second cooling channels (17) is largest at their respectively adjacent longitudinal ends.

4. Rocket engine section (1) according to any one of the preceding claims,
wherein one of the first part (5) and the second part (15) comprises radially open cooling channels (7) that are open in a direction away from the longitudinal axis (3) along the longitudinal axis (3), while the other of the first part (5) and the second part (15) comprises radially closed cooling channels (17) that are closed in a direction away from the longitudinal axis (3) along the longitudinal axis (3).

5. Rocket engine section (1) according to claim 4,
wherein the radially closed cooling channels (17) are closed in a direction away from the longitudinal axis (3) along a portion of the longitudinal axis (3) and open in a direction away from the longitudinal axis (3) at their longitudinal ends adjacent to the radially open cooling channels (7).

6. Rocket engine section (1) according to claim 5,
wherein the radially closed cooling channels (17) are open in a radially stepped down portion (19) of the respective part (15) and axially spaced from a step (21) created by the stepped down portion (19) along the longitudinal axis (3).

7. Rocket engine with a rocket engine section (1) according to any one of the preceding claims, wherein the first part (5) and the second part (15) are:
• both parts of a rocket engine combustion chamber, or
• both parts of a rocket engine nozzle, or
• a part of the rocket engine combustion chamber and a part of the rocket engine nozzle connected to each other.

8. Method of manufacturing a rocket engine section (1) according to any one of claims 1 to 8 or a rocket engine according to claim 9, comprising:
connecting the first part (5) and the second part (15) to each other axially along the longitudinal axis (3) such that each cooling channel of the first cooling channels (7) is connected to a different cooling channel of the second cooling channels (17),
wherein the connecting includes:
abutting the first part (5) and the second part (15) against each other axially, and aligning their cooling channels (7, 17) circumferentially, such that they extend along a common direction, and permanently connecting the first part (5) and the second part (15) to each other,
**characterized in that**
the connecting then includes:
removing material between the respective first cooling channel (7) and second cooling channel (17).
